# EUROPEAN PATENT APPLICATION

(11) **EP 3 281 510 A1**
(43) Date of publication of application: **14.02.2018**
(21) Application number: 17186036.4
(22) Date of filing: 11.08.2017
(51) Int. Cl.: A01C 7/04, A01C 19/02

(54) **DEVICE FOR DISTRIBUTING SEEDS FOR A SOWING MACHINE**

(30) Priority: 12.08.2016 IT 201600085262
(71) Applicant: Turchetto, Alfredo, 33084 Cordenons (PN) (IT)
(72) Inventor: Turchetto, Alfredo, 33084 Cordenons (PN) (IT)
(74) Representative: Petraz, Gilberto Luigi

(57) **Abstract**

Device for distributing seeds (S) comprising at least a box-like body (11) in which a distributor body (12) is installed rotating, the box-like body (11) and the distributor body (12) defining on one side (13) of the distributor body (12) at least one containing compartment (14) into which the seeds (S) are introduced, and a discharge compartment (15) from which the seeds (S) are discharged, an actuation member (18) being kinematically connected to the distributor body (12) and configured to make the distributor body (12) selectively rotate around its axis of rotation (Z) and to selectively remove the seeds (S) from the containing compartment (14) and to release them in a controlled manner through said discharge compartment (15).

## Description

### FIELD OF THE INVENTION

The present invention concerns a device for distributing seeds installable in a sowing machine, and suitable to perform an automatic sowing of a determinate seed, making the seeds fall on the agricultural land in a regular sequence.

The present invention also concerns the sowing machine that comprises at least one device for distributing seeds.

### BACKGROUND OF THE INVENTION

Sowing machines are known, for example, of the pneumatic type used in the agricultural field to deposit seeds at regular and predefined intervals in the ground.

Sowing machines generally comprise a plurality of distribution devices disposed distanced from each other in a transverse direction to the normal driving direction of the sowing machine, each of which is configured to release the seed in a controlled and precise manner to the ground.

Known distribution devices generally comprise a box-like body in which a distributor body is installed, rotating. The box-like body and the distributor body define together a containing compartment into which the seeds are introduced, fed for example from a loading hopper of the sowing machine.

The distributor body is generally defined by a bell-type drum and a holed disc attached to the bell-type drum and defining with the latter a suction chamber.

The holed disc is installed in the box-like body facing toward the containing chamber or, during use, in direct contact with the seeds contained in the containing compartment.

The holed disc is also provided with a plurality of through holes with sizes coordinated with a predefined type of seed. In particular, each hole has a diameter that is less than the average size of the seed, to prevent it from passing through the through hole itself.

The bell-type drum is provided with a suction aperture which opens toward the suction chamber and in which a suction device is connected through a suction pipe.

The suction device generates in the suction chamber and therefore also through the through holes of the holed disc, a depression such as to retain a seed through suction in correspondence with each through hole.

The box-like body and the distributor body together also define a discharge compartment located adjacent to the containing compartment and in communication with the latter.

The distributor body is made to rotate so that the through holes of the holed disc pass from the containing compartment to the discharge compartment.

In this way, when the through holes of the holed disc are put in correspondence with the containing compartment, thanks to the action of depression, each one sucks in and retains a seed on the holed disc. When, on the other hand, through rotation, the through holes of the holed disc are put in correspondence with the discharge compartment, a release device allows to release the seeds from the holed disc.

Actuation members, configured to make the distributor body rotate, are normally associated with the distributor body.

In particular, a solution is known in which the actuation members comprise a toothed pulley associated with the distributor body and on which a transmission chain is wound. The transmission chain is driven by a drive pulley installed on a transmission shaft on which the drive pulleys of all the other devices for distributing seeds of the sowing machine are also installed.

The transmission shaft, in turn, is connected to a mechanical speed gearbox driven by the wheels of the sowing machine.

One disadvantage associated with the mechanical gearbox is that it is possible to obtain only a discrete adjustment of the seed distribution.

Moreover, these solutions are mechanically extremely complex to achieve, particularly where the sowing machine is the type with a variable sowing width. In this case, in fact, the different distribution devices can be positioned, on each occasion, at different distances between them, and the actuation members comprise complex return or adaptation elements, such as telescopic arms, to allow the transmission of motion to all the distributor devices.

A device for distributing seeds for a sowing machine is also known from document EP-A-2,923,543, which comprises a box-like body in which a hollow drum is positioned rotating.

The hollow drum is provided with a support disc having a plurality of through holes disposed aligned along a circumference, and in which the seeds to be deposited on the ground are positioned and held, on its surface facing toward the outside.

The hollow drum is also provided with a central pipe that allows the internal cavity of the hollow drum to be put in a condition of atmospheric pressure.

Between the box-like body and the hollow drum a box for containing the seeds is defined, which are fed through a feed pipe.

The containing compartment is put in fluid communication with a pneumatic pipe which generates a pressure condition in the containing compartment.

Therefore, between the containing compartment and the internal cavity of the hollow drum, a difference in pressure is defined, suitable to ensure that the seeds are retained through the holes in the support disc.

A cover block is installed in a fixed position in the internal cavity of the hollow drum, is positioned resting on the support disc and closes the through holes in the latter.

Closing the holes with the cover block allows to eliminate the difference in pressure between the inside of the drum and the containing compartment, allowing to release the seeds present in the through holes in correspondence with a discharge channel. The hollow drum is provided on its external surface with a toothed crown which engages on a toothed drive wheel connected to an electric drive motor.

The toothed wheel and toothed crown are both put in the containing compartment and are both subject to the pressure that is induced.

This solution, however, is particularly complex to achieve, since it requires the presence of sealing gaskets on each side, usually in motion, which is installed in the box-like body and is made through toward the inside of the containing compartment.

In particular, in this solution, gaskets are required at least in the zone where the drive shaft of the electric motor is installed, and on the support shaft of the hollow drum.

This solution, however, requires frequent maintenance work to replace at least the gaskets and worn parts.

Another disadvantage of this solution is that the gaskets generate rather significant frictions which can increase the power required to drive the rotation of the drum.

Moreover, this solution requires that the containing compartment, once loaded with a certain quantity of seeds, must be sealed hermetically to allow the generation of said pressure difference. This greatly limits the productive capacity of the sowing machine.

This solution is not very versatile since the distribution device thus obtained can only be adopted with an electric type actuation, and in the case of a breakdown of the electric system, it is not possible to use the sowing machine.

One purpose of the present invention is to obtain a device for distributing seeds for a sowing machine, which allows a regular and precise sowing of the seeds.

It is also a purpose of the present invention to obtain a device for distributing seeds that is extremely versatile. In particular, it is a purpose of the present invention to obtain a distribution device which can be actuated both in electric mode and also in a conventional mechanical mode, that is, to obtain a distribution device that can be adapted simply for electric actuation and mechanical actuation.

It is also a purpose of the present invention to obtain a device for distributing seeds that is economical and requires low maintenance.

It is also a purpose of the present invention to obtain a sowing machine provided with a plurality of distribution devices that is extremely precise and allows to control the sowing on each distributor.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a device for distributing seeds, in accordance with the present invention, comprises at least a box-like body in which a distributor body is installed rotating. The box-like body and the distributor body define on one side of the distributor body at least one containing compartment into which the seeds are introduced, and a discharge compartment from which the seeds are discharged. An actuation member is kinematically connected to the distributor body and configured to make the distributor body selectively rotate around its axis of rotation and to selectively remove the seeds from the containing compartment and to release them in a controlled manner through the discharge compartment.

In accordance with one aspect of the present invention, a toothed wheel is associated with the distributor body, coaxial to the axis of rotation and kinematically connected to the drive member.

In accordance with another aspect of the present invention, the distributor device comprises a pinion toothed wheel selectively rotatable around an axis parallel to the axis of rotation and kinematically connected to the toothed wheel of the distributor body. The pinion toothed wheel is also provided with connection means configured to attach, on the pinion toothed wheel, a toothed crown. The toothed crown can be positioned coaxial to the pinion toothed wheel and kinematically connected to a mechanical drive member. The pinion toothed wheel can be selectively associated with a rotation shaft of an electric motor attached to the box-like body, or to a pin of a support bracket attached to the box-like body.

This solution renders the distribution device extremely versatile since it can be driven either by the electric motor that is connected to the rotation shaft, or it can be driven by a mechanical drive member that is connected, for example by means of a toothed belt or a chain, to the toothed crown.

With this solution, depending on the type of drive chosen, mechanical or electric, it is possible to install an electric motor or the support bracket without needing a complete re-designing of the device for distributing seeds. The producer of distribution devices or of sowing machines will therefore have a single device that he will be able to adopt for an electric or mechanical drive irrespectively. Moreover, in the case of a power failure in the electric part, it is possible to rapidly convert the actuation from electric to mechanical without needing to completely re-arrange the entire sowing machine. Similarly, if a user wishes to pass from a mechanical type drive to an electric drive, he only needs to connect the respective electric motors to the distributors, without needing to completely replace the distribution devices.

This solution also allows to obtain an extremely compact device for distributing seeds able to control the deposition of the seeds to the ground precisely and continuously.

The presence of a toothed wheel directly associated with the distributor body ensures a precise control of the rotation of the latter and therefore of the subsequent deposition of the seeds to the ground.

According to a possible solution of the present invention, the kinematic connection between the toothed wheel and the electric motor is achieved by a system of gears. This determines a distribution device which is extremely compact compared with known solutions.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view of a device for distributing seeds in accordance with the present invention;
- fig. 2 is a rear elevation view, of the device for distributing seeds in fig. 1;
- fig. 3 is a front elevation view, in section of the distribution device in fig. 1;
- fig. 4 is a view in section along the section line IV-IV of fig. 3;
- fig. 5 shows a sowing machine provided with at least one device for distributing seeds in accordance with the present invention;
- fig. 6 shows a possible variant embodiment of fig. 2;
- fig. 7 is a view in section along the section line VII-VII of fig. 6.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We shall now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

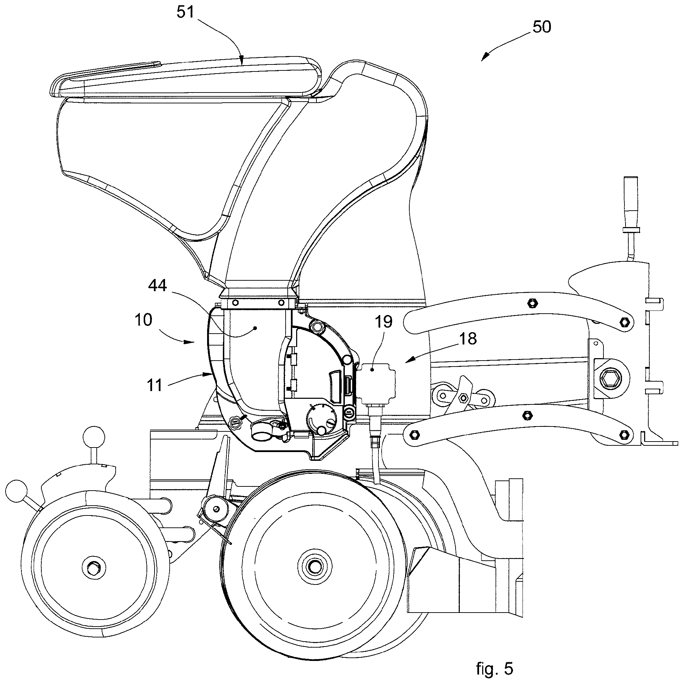

With reference to the attached drawings, a device for distributing seeds S is indicated in its entirety by the reference number 10 and can be installed for example in a sowing machine 50 (fig. 5).

The distribution device 10 comprises at least one box-like body 11 in which a distributor body 12 is rotatably installed.

The box-like body 11 and the distributor body 12 define, on a first side 13 of the distributor body 12, at least a containing compartment 14 in which the seeds S are introduced and a discharge compartment 15 from which the seeds S are discharged to the ground.

The distribution body 12 is configured to selectively remove the seeds S from the containing compartment 14 and release them in a controlled manner through the discharge compartment 15.

The containing compartment 14 is provided with an introduction aperture 16 through which the seeds S are introduced. The introduction aperture 16 is normally in communication with a loading hopper 51 of the sowing machine 50.

In particular, the introduction aperture 16 is directly connected to the loading hopper 51 and allows to put the containing compartment 14 at atmospheric pressure.

The discharge compartment 15 is provided in turn with a discharge aperture 17 facing toward the ground during use and through which the seeds S are discharged.

According to possible embodiments of the invention, the distributor body 12 is kinematically connected to an actuation member 18 configured to selectively make the distributor body 12 rotate around its axis of rotation Z.

According to one aspect of the present invention, the distribution device 10 comprises a pinion toothed wheel 22 selectively rotatable around an axis parallel to the axis of rotation Z of the distributor body 12. The pinion toothed wheel 22 is kinematically connected to the distributor body 12 to make it rotate as described below.

According to the present invention, the pinion toothed wheel 22 can be driven both electrically by using an electric motor 19 and also, alternatively, by using a mechanical drive member 54. The mechanical drive member 54 is configured to generate a rotating motion that is then transmitted to the pinion toothed wheel 22.

By way of example only, it can be provided that the mechanical drive member 54 is associated with the wheels of the sowing machine, which are located, during use, resting on the ground and are made to rotate by interaction with the latter.

According to possible solutions, the electric motor 19 can be a brushless motor. This type of motor is particularly suitable for the heavy environments in which the distribution device 10 has to operate.

According to a variant embodiment of the present invention, the electric motor 19 can be the step type, to allow a precise control of the deposition of the seeds S.

According to possible solutions, the electric motor 19 can be installed directly on the box-like body 11, thus obtaining an extremely compact distribution device 10.

According to another aspect of the present invention, a toothed wheel 20, coaxial with the axis of rotation Z, is associated with the distributor body 12 and kinematically connected to the electric motor 19.

According to possible solutions, the toothed wheel 20 and the electric motor 19 are connected to each other by means of gears. In this case, the toothed wheel 20 is of a gear.

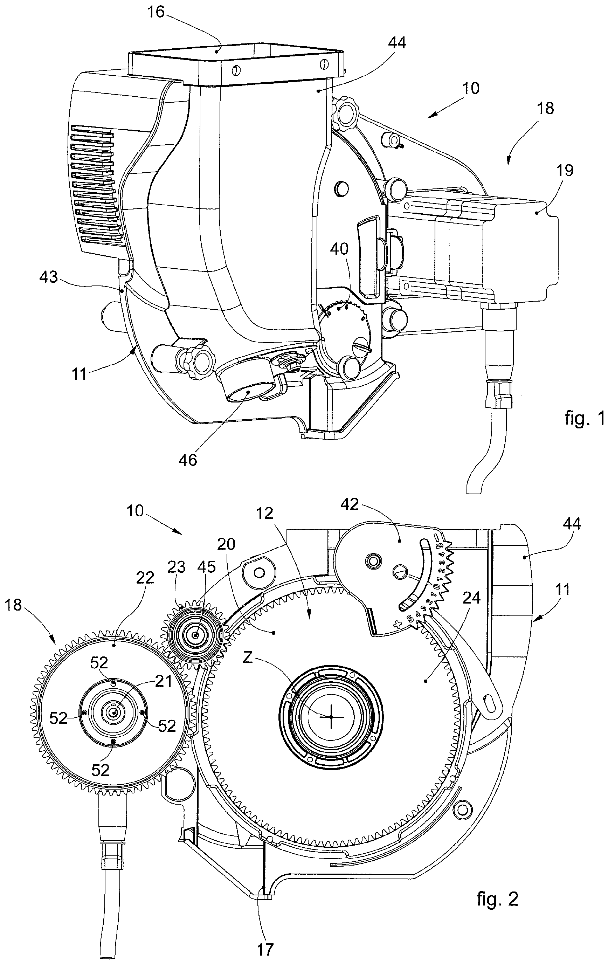

According to possible solutions, one of which is shown in fig. 2, the electric motor 19 and the toothed wheel 20 are connected to each other by means of one or more gear toothed wheels.

According to a possible variant embodiment, not shown, the electric motor 19 is connected to the toothed wheel 20 with a chain transmission, or a toothed belt.

According to the embodiment shown in fig. 2, the electric motor 19 is provided with a drive shaft 21 on which the pinion toothed wheel 22, kinematically connected to the toothed wheel 20 of the distributor body 12, is keyed.

According to a possible solution, not shown in the drawings, the pinion toothed wheel 22 can be directly engaged on the toothed wheel 20 of the distributor body 12. This solution allows to obtain an extremely compact and efficient distribution device 10, the transmission performance of the gears being optimized.

According to a possible variant embodiment, shown in fig. 2, an idle toothed wheel 23 can be directly engaged between the pinion toothed wheel 22 and the toothed wheel 20 of the distributor body 12, in order to transmit motion from the electric motor 19 to the toothed wheel 20.

The idle toothed wheel 23 can be installed on a rotation pin 45 installed in a fixed position on the box-like body 11.

The presence of the idle toothed wheel 23 allows to make both the pinion toothed wheel 22 and the toothed wheel 20 rotate, with the same direction of rotation.

In particular, this solution is particularly advantageous if it is provided to make the distribution device 10 suitable to be driven by the electric motor 19, as described in the present description, or in a conventional manner, for example by means of the mechanical drive member 54, for example by means of a chain, or a toothed belt.

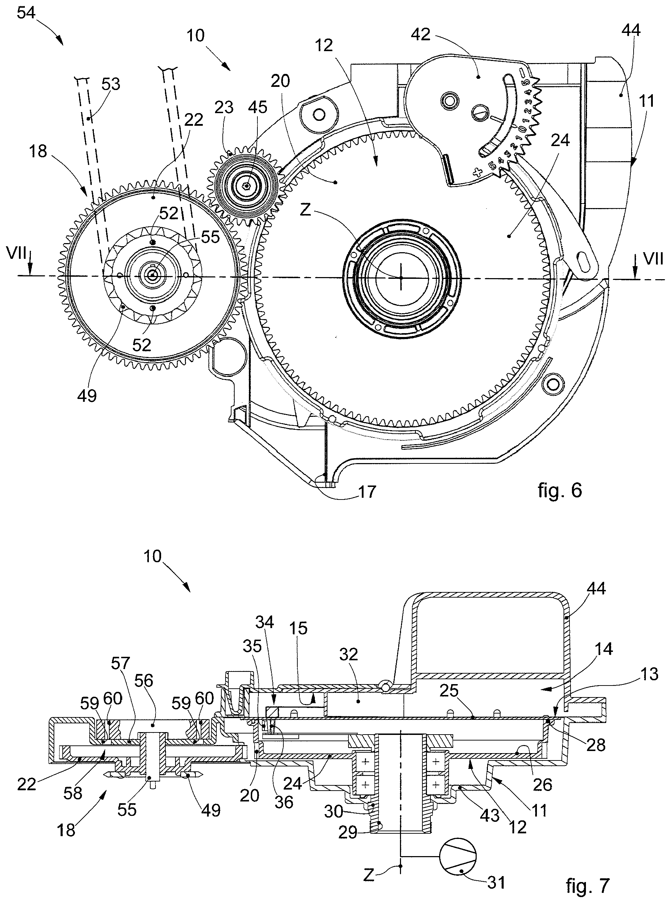

According to another aspect of the invention, to allow the mechanical drive of the distribution device, fig. 6, the pinion toothed wheel 22 is provided with connection means 52 configured to attach a toothed crown 49 on the pinion toothed wheel 22.

The toothed crown 49 can be positioned coaxial to the pinion toothed wheel 22 and can be kinematically connected to the mechanical drive member 54.

By way of example only, the chain, or toothed belt, which in turn is connected to the mechanical drive member 54, winds around the toothed crown 49 during use.

According to a possible solution, the mechanical drive member 54 can comprise at least one command shaft configured to drive all the distribution devices 10. The command shaft can be kinematically connected to the wheels of the sowing machine 50.

Thanks to the presence of the idle toothed wheel 23, it is possible to ensure that the direction of rotation imparted by the chain on the pinion toothed wheel 22 is the same direction of rotation as the toothed crown 20 of the distributor body 12.

This greatly increases the versatility of use of the distribution device 10.

The toothed crown 49 is put coaxial to the pinion toothed wheel 22 and outside the box-like body 11, so as to allow the direct connection of the belt or chain.

The toothed crown 49 can be attached to the pinion toothed wheel 22 by means of connection elements, comprising, for example, screws, pins, nuts, or similar and comparable elements.

By way of example only, it can be provided that both the toothed crown 49 and the pinion toothed wheel 22 are provided with holes, made in mating positions, and in which the connection elements can be inserted.

The connection means 52 can comprise, for example, holes, possibly threaded, made on the pinion toothed wheel 22.

According to another aspect of the present invention (figs. 6-7), if the distributor body 12 is to be actuated with the mechanical drive member 54, the pinion toothed wheel 22 is installed on a pin 55 of a support bracket 56 which is attached to the box-like body 11.

According to this embodiment, the pinion toothed wheel 22 is installed idle, that is, free to rotate on the pin 55 of the support bracket 56. Possibly, support elements such as bearings can be provided between the pin 55 and the support bracket 56.

However, it is not excluded that in possible solutions, the pinion toothed wheel 22 can be installed on the rotation shaft 21 of the electric motor 19 and made to rotate by the mechanical drive member 54 by means of the toothed crown 49.

According to a possible embodiment of the present invention, the box-like body 11 is provided with a support wall 57 having attachment means 58 configured to selectively attach the support bracket 56 (figs. 6 and 7) or the electric motor 19 (figs. 1-4) to the box-like body 11.

The attachment means 58 can comprise a plurality of holes 59 made in the support wall 57. Moreover, attachment seatings 60 are made in the support bracket 56 and in the electric motor 19 according to a pattern coordinated with the pattern in which the holes 59 are made in the support wall 57. Connection elements, for example threaded, can be inserted into the holes 59 and the attachment seatings 60, to provide a solid connection of the electric motor 19 or, alternatively, the support bracket 56 to the box-like body 11.

According to possible embodiments of the present invention, it is provided that the pinion toothed wheel 22 has a smaller nominal diameter than that of the toothed wheel 20 of the distributor body 12. In this way, by driving the electric motor 19, a reduction is obtained in the speed of rotation of the distributor body 12.

According to a possible solution of the present invention, the distribution body 12 comprises a bell-type drum 24 having a concave configuration and a transfer disc 25 attached to the bell-type drum 24 and defining with it a suction chamber 26.

According to a possible solution, it can be provided that the toothed wheel 20 is directly associated with the bell-type drum 24, for example attached to the latter by mechanical connection means.

This solution allows to simplify the operations to make the toothed wheel 20, as it is possible to adapt it to different types of distributor bodies 12, for example, different in size and shape.

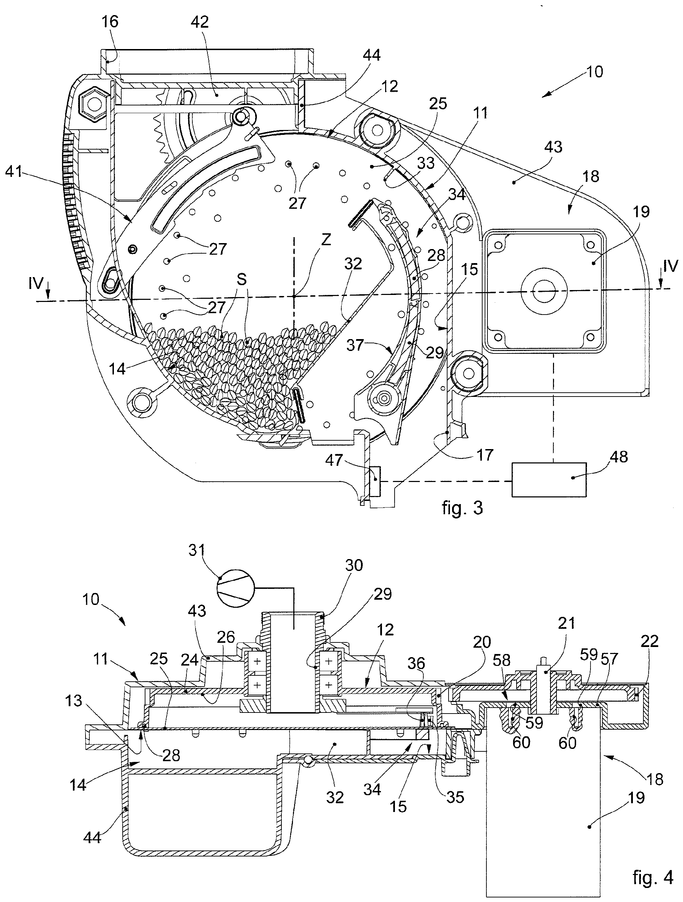

According to a possible alternative embodiment, shown, for example, in figs. 2 and 4, the toothed wheel 20 is made in a single body with the distributor body 12, in this case it is made in a single body with the bell-type drum 24.

This solution allows to reduce the bulk of the distributor body 12, by obtaining an extremely compact distribution device 10.

The transfer disc 25 is installed in the box-like body 11 facing the containing compartment 14 or, during use, in direct contact with the seeds S present in the latter.

The transfer disc 25 is provided with a plurality of through holes 27 of a size coordinated with a predefined type of seed S. In particular, each through hole 27 has a diameter less than the average size of the seed S to prevent the latter from passing through the through hole 27 itself.

The through holes 27 are made reciprocally distanced along a circumference.

According to possible embodiments of the present invention, the box-like body 11 can be provided with at least one separation wall 32 configured to separate the containing compartment 14 and the discharge compartment 15 from each other. In particular, it can be provided that the separation wall 32 extends in an incident direction with respect to the transfer disc 25 and defines, with the box-like body 11, a passage gap 33 for the seeds S.

The passage gap 33 is made in a high part of the transfer disc 25 and in correspondence with a zone of the circumference on which the through holes 27 of the transfer disc 25 are made. This allows the passage of the seeds S from the containing compartment 14 to the discharge compartment 15.

Between the transfer disc 25 and the bell-type drum 24 a gasket 28 can be provided, configured to guarantee the suction seal in the suction chamber 26.

The bell-type drum 24 is provided with a suction aperture 29 which opens toward the suction chamber 26 and in which a suction device 31 of the distributor device 10 is connected, by means of a suction pipe 30.

The suction pipe 30 can be installed in the bell-type drum 24 in a through hole made at the center of the latter.

The suction device 31 generates in the suction chamber 26, and therefore also through the through holes 27 of the transfer disc 25, a depression able to hold through suction a seed S in correspondence with each through hole 27.

The suction device 31 can comprise an air suction pump.

The seed S sucked in by the depression generated in the suction chamber 26 is transferred, by rotation of the distributor body 12, from the containing compartment 14 to the discharge compartment 15.

Thanks to the fact that the air suction is generated in the suction chamber defined by the distributor body and not in the seed containing compartment, it is possible to reduce the number of pneumatic seal components and to greatly reduce the frequency of maintenance operations required.

Moreover, this solution prevents having to hermetically close the seed containing compartment, as happens in the state of the art, and allows the seeds to be deposited continuously and without any interruption, for example, from a loading hopper located above.

Generating the depression directly in the suction chamber also prevents gaskets or pneumatic sealing components from opposing each other or generating friction, during the rotation of the distributor body. With the present invention, in fact, it is possible to use electric motors with drive powers lower than those used in the distribution devices known in the state of the art.

According to a possible solution, the distribution body 12 can be provided with at least one release device 34 installed in the discharge compartment 15 and configured to determine the release of the seeds S.

According to a possible solution, shown in fig. 4, the release device 34 can comprise a shutter element 35 installed in a fixed position in the suction chamber 26 and resting against the internal surface, that is, the surface facing toward the bell-type drum 24, of the transfer disc 25.

The shutter element 35, in the predefined zone where it is installed, interrupts the depression action generated through the through holes 27, thus allowing the release of the seed S.

According to a possible solution, a brush 36 can also be associated with the shutter element 35, and is positioned on the transfer disc 25 upstream from the direction of movement of the transfer disc 25.

The bristles or other flexible elements of the brush 36 are inserted into the through holes 27 of the transfer disc 25 to thrust the seeds S toward the outside and prevent the same or their parts from being pinched between the transfer disc 25 and the shutter element 35. This prevents the seeds S from being "guillotined" by the action of the shutter element 35.

According to other embodiments of the invention, it can be provided that the release device 34 comprises a separation element 37 installed in the discharge compartment 15 and resting on the external surface of the transfer disc 25.

In particular, it can be provided that the separation element 37 can comprise at least a first portion 38 installed substantially tangent to the through holes 27, and a second portion 39 which intercepts the through holes 27 of the transfer disc 25 which, on each occasion, are taken to its position, determining the separation of the seeds S from the through holes 27.

According to possible embodiments, an adjustment element 40 (fig. 1) can be associated to the separation element 37 and is configured to change the position of the separation element 37 with respect to the through holes 27 of the transfer disc 25.

According to another embodiment of the invention, a selector device 41 can be associated with the distribution body 12 positioned in the containing compartment 14, resting on the external surface of the distribution disc 25.

The selector device 41 is positioned substantially tangent to the circumference on which the through holes 27 of the transfer disc 25 are made.

The selector device 41 is configured to act on the seeds S which, on each occasion, are held by the through holes 27 and to define their correct positioning. The selector device 41 also prevents a through hole 27 from retaining multiple seeds S, and therefore allows to remove excess seeds S.

An adjustment element 42 can also be associated with the selector device 41, configured to adjust the positioning of the selector device 41 with respect to the through holes 27 of the transfer disc 25.

According to possible embodiments of the present invention, the box-like body 11 can comprise a support element 43 configured to support at least the distributor body 12 and the electric motor 19, and a cover element 44 which can be associated with the support element 43 to close between them at least the distributor body 12 and to define the containing compartment 14 and discharge compartment 15.

The cover element 44 can itself be provided with the separation wall 32.

The box-like body 11, in this case, the cover element 44, can be provided with a discharge hole to allow the seeds S contained in the containing compartment 14 to be discharged. A closing stopper 46 can be associated with the discharge hole and is selectively removable to allow the possible discharge of seeds S from the containing compartment 14.

According to possible solutions of the present invention, at least one seed detector 47 can be associated with the distributor body 12, configured to detect the movement of the seeds S inside the distributor body 12.

The detector 47 can be configured to detect whether the through holes 27 are all holding a seed S.

According to the solution shown in fig. 3, the detector 47 can be associated with the discharge aperture 17 to detect the passage of the seeds S to the ground.

The detector 47 can be connected to a control and command unit 48 configured to receive the data relating to the seeds S moved by the distributor body 12 and to command the actuation of the electric motor 19. In this way, it is possible to adjust the drive speed of the electric motor 19 in relation to the seeds S which on each occasion are discharged to the ground. Thus, for example, if a through hole 27 does not deliver a seed S, the rotation of the transfer body 12 will be accelerated to compensate for this anomaly.

The control and command unit 48 can also indicate the lack of seeds S in the distribution device, in this case requesting the intervention of an operator for the necessary supply.

The control and command unit 48 can also be configured to receive the data of several sensors 47 of the same distribution device 10, or several distribution devices 10 of a sowing machine 50.

It is clear that modifications and/or additions of parts can be made to the distribution device 10 as described heretofore, without departing from the field and scope of the present invention.

It is also clear that, although the present invention has been described with reference to some specific examples, a person of skill in the art shall certainly be able to achieve many other equivalent forms of distribution device 10, having the characteristics as set forth in the claims and hence all coming within the field of protection defined thereby.

## Claims

1. Device for distributing seeds (S) comprising at least a box-like body (11) in which a distributor body (12) is installed rotating, said box-like body (11) and said distributor body (12) defining on one side (13) of said distributor body (12) at least one containing compartment (14) into which said seeds (S) are introduced, and a discharge compartment (15) from which said seeds (S) are discharged, an actuation member (18) being kinematically connected to said distributor body (12) and configured to make the distributor body (12) selectively rotate around its axis of rotation (Z) and to selectively remove the seeds (S) from said containing compartment (14) and to release them in a controlled manner through said discharge compartment (15), a toothed wheel (20) being associated with said distributor body (12), coaxial to said axis of rotation (Z) and kinematically connected to said actuation member (18), **characterized in that** it comprises a pinion toothed wheel (22) selectively rotatable around an axis parallel to said axis of rotation (Z) and kinematically connected to said toothed wheel (20) of the distributor body (12), **in that** said pinion toothed wheel (22) is provided with connection means (52) configured to attach a toothed crown (49) on said pinion toothed wheel (22), said toothed crown (49) being positionable coaxial to said pinion toothed wheel (22) and kinematically connectable to a mechanical drive member (54), **and in that** said pinion toothed wheel (22) can be selectively associated with a rotation shaft (21) of an electric motor (19) attached to said box-like body (11), or to a pin (55) of a support bracket (56) attached to said box-like body (11).

2. Device as in claim 1, **characterized in that** said box-like body (11) is provided with a support wall (57) with attachment means (58) configured to selectively attach said support bracket (56) or said electric motor (19) to said box-like body (11).

3. Device as in claim 2, **characterized in that** said attachment means (58) comprise a plurality of holes (59) made in said support wall (57), **and in that** attachment seatings (60) are made in said electric motor (19) and in said support bracket (56) in a pattern coordinated to the pattern in which said holes (59) are made.

4. Device as in any claim hereinbefore, **characterized in that** said toothed crown (49) is attached on said pinion toothed wheel (22) by said connection means (52).

5. Device as in any claim hereinbefore, **characterized in that** said toothed crown (49) is connected kinematically to said mechanical drive member (54) by a chain or a toothed belt.

6. Device as in any claim hereinbefore, **characterized in that** said toothed wheel (20) is made in a single body with said distributor body (12).

7. Device as in any claim hereinbefore, **characterized in that** said distributor body (12) comprises a bell-type drum (24) with a concave conformation and a transfer disc (25) attached to the bell-type drum (24) and defining with the latter a suction chamber (26), said toothed wheel (20) being associated directly with said bell-type drum (24).

8. Device as in claim 7, **characterized in that** said transfer disc (25) is installed in said box-like body (11) facing toward said containing compartment (14) and is provided with a plurality of through holes (27) with sizes coordinated with those of said seeds (S), **and in that** a suction device (31) is connected to said suction chamber (26) to generate through said through holes (27) a depression to retain at least one seed (S).

9. Device as in any claim hereinbefore, **characterized in that** said electric motor (19) and said toothed wheel (20) are connected to each other by one or more toothed wheels.

10. Device as in any claim hereinbefore, **characterized in that** said pinion toothed wheel (22) engages directly on the toothed wheel (20) of said distributor body (12).

11. Device as in any claim hereinbefore, **characterized in that** between said pinion toothed wheel (22) and said toothed wheel (20) of said distributor body (12) an idle toothed wheel (23) engages directly, to transmit motion from said pinion toothed wheel (22) to said toothed wheel (20).

12. Device as in any claim hereinbefore, **characterized in that** at least one detector (47) of said seeds (S) is associated with said distributor body (12) and is configured to detect the movement of the seeds (S) inside said distributor body (12), **and in that** said detector (47) is connected to a command and control unit (48) configured to receive the data relating to said seeds (S) moved by said distributor body (12) and to command the drive of said electric motor (19).

13. Sowing machine comprising a plurality of distribution devices (10) of seeds (S) as in any claim hereinbefore.
